# EUROPÄISCHE PATENTANMELDUNG

(11) **EP 2 579 217 A1**
(43) Veröffentlichungstag der Anmeldung: **10.04.2013**
(21) Anmeldenummer: 11183840.5
(22) Anmeldetag: 04.10.2011
(51) Int. Cl.: G07B 17/00, G07B 11/11

(54) **Verfahren und Vorrichtung für die Markierung von Wertlabeln**

(71) Anmelder: Deutsche Post AG, 53113 Bonn (DE)
(72) Erfinder: Krüger, Jürgen, 32602 Vlotho (DE); Anthonj, Rainer, 77866 Rheingau (DE); Bell, Alan, PO16 OSL Fareham (GB); Lotter, Jürgen, 64285 Darmstadt (DE)
(74) Vertreter: Jostarndt, Hans-Dieter

(57) **Zusammenfassung**

Die Erfindung betrifft die Markierung von Labeln und Wertmarken. Insbesondere betrifft die Erfindung die Entwertung von Freimachungen auf Postsendungen in Form von aufgebrachten oder aufgedruckten Postwertzeichen durch die Bestrahlung mit energiereicher Strahlung. Das erfindungsgemäße Verfahren zum Detektieren von mehrfach benutzten, für die Einmalbenutzung vorgesehenen, lumineszierende Partikel enthaltenden und auf zu transportierende Sendungen aufgebrachten Wertlabeln sieht vor, dass diese Sendungen während des Versands eine Sortieranlage durchlaufen, in der das Vorhandensein von Wertlabeln, die eine Fläche mit im Wesentlichen gleichverteilten lumineszierenden Partikeln enthalten, überprüft wird. Die eine solche Fläche aufweisende Sendung wird einer Markierungsvorrichtung zugeführt. Hier wird die im Wesentlichen gleichverteilt lumineszierende Partikel enthaltende Fläche des Wertlabels als Substrat mit einer energiereichen Strahlung bestrahlt. Dabei wird dort, wo die Strahlung auf das Substrat auftrifft, die lumineszierende Eigenschaft der Partikel soweit zerstört, dass sie bei nochmaligem Durchlauf durch die Sortieranlage nicht mehr als lumineszierend detektiert werden.

## Beschreibung

Die Erfindung betrifft die Markierung von Labeln und Wertmarken. Insbesondere betrifft die Erfindung die Entwertung von Freimachungen auf Postsendungen in Form von aufgebrachten oder aufgedruckten Postwertzeichen durch die Bestrahlung mit energiereicher Strahlung.

Es ist üblich, für die Beförderung von Postsendungen ein Transportentgelt zu erheben. Dieses Entgelt wird entrichtet, in dem Postwertzeichen gekauft und auf die entsprechende Sendung geklebt werden. Es ist auch möglich, Sendungsverpackungen zu erwerben, die bereits eine aufgedruckte oder anders aufgebrachte Freimachung enthalten. Für Briefe sind solche Sendungsverpackungen unter dem Begriff Plus-Brief bekannt. Als Sicherheitsmerkmal können alle diese Freimachungsvermerke mit einer Farbe bedruckt sein oder gedruckt werden, die lumineszierende Stoffe enthält und in Sortieranlagen detektiert werden kann, so dass Sendungen ohne Freimachungsvermerk oder mit einem gefälschten Freimachungsvermerk erkannt und gegebenenfalls ausgeschleust werden können. Dazu werden die Sendungen in der Sortieranlage mit Licht mit Wellenlängen aus einem Spektralbereich angestrahlt, der eine Wellenlänge enthält, die geeignet ist, die Lumineszenz der Stoffe anregt. Flächen, die lumineszierende Stoffe enthalten, erscheinen unter einer solchen Beleuchtung als helle Flächen, Flächen ohne lumineszierende Stoffe hingegen dunkel. Die mit einem echten Freimachungsvermerk gekennzeichneten Sendungen werden anschließend durch einen Aufdruck entwertet. Dieser Aufdruck kann mittels manuellem Stempeln oder automatisch mit beispielsweise berührenden oder berührungslosen Druckverfahren erfolgen, wobei der Freimachungsvermerk beispielsweise mit einer nicht lumineszierenden Farbe zumindest teilweise bedruckt und somit zumindest partiell überdeckt wird, so dass die lumineszierende Grundfarbe abgedeckt ist und der Freimachungsvermerk bei einem eventuellen zweiten Benutzen als bereits entwertet erkannt wird.

Trotzdem kann es vorkommen, dass Freimachungsvermerke mehrfach verwendet werden. Zum Einen kann dies zufällig geschehen, sei es, dass Freimachungsvermerke durch Anlagenfehler oder aus Versehen bei einem ersten Durchlauf durch die Sortieranlage nicht entwertet wurden oder der Entwertungsdruck so schwach ausfällt, dass er zumindest nicht mehr automatisch detektiert wird. Zum anderen wird aber auch versucht, die Entwertungsvermerke beispielsweise mittels chemischer, optischer und/oder mechanischer Verfahren zumindest soweit zu entfernen, dass sie von automatischen Sortieranlagen oder auch dem menschlichen Auge nicht mehr erkannt werden. Da es sich um originale Freimachungsvermerke handelt, beinhalten sie die lumineszierende Druckfarbe und könnten somit als echte Postwertzeichen in der Sortieranlage erkannt werden.

Dem Postdienstleistungsanbieter kann durch solche Mehrfachverwendungen von Freimachungsvermerken ein hoher Schaden entstehen.

Dasselbe Problem taucht in anderen Anwendungen auf, bei denen Wertlabel unerlaubterweise mehrfach verwendet werden, wie es beispielsweise bei Eintrittstickets vorkommen kann. Genau so sind Label mit einer Information vorstellbar, wobei zweifelsfrei nachgewiesen werden muss, dass diese Informationen bereits einmal ausgelesen wurde. Auch solche Label sollen im Folgenden unter dem Begriff Wertlabel verstanden werden.

Aufgabe der Erfindung ist es daher, ein Verfahren anzugeben, dass die Detektionsrate von Mehrfachverwendungen von Wertlabeln, die eine einen lumineszierenden Stoff enthaltende Fläche aufweisen, deutlich erhöht. Dabei sollen sowohl bei einer ersten Verwendung zufällig nicht entwertete Wertlabel als auch manipulierte Wertlabel mit hoher Wahrscheinlichkeit detektiert werden können.

Eine weitere Aufgabe der Erfindung besteht darin, eine Vorrichtung anzugeben, mit der das Verfahren durchgeführt werden kann.

Erfindungsgemäß wird diese Aufgabe durch ein Verfahren mit den Merkmalen des unabhängigen Anspruches 1 gelöst. Vorteilhafte Weiterbildungen des Verfahrens ergeben sich aus den Unteransprüchen 2 - 11 Die Aufgabe wird ferner durch eine Vorrichtung nach Anspruch 12 gelöst. Vorteilhafte Ausführungsformen der Vorrichtung ergeben sich aus den Unteransprüchen 13 - 15.

Das erfindungsgemäße Verfahren zum Detektieren eines mehrfach benutzten, für die Einmalbenutzung vorgesehenen, eine einen lumineszierenden Stoff enthaltende Fläche aufweisenden Wertlabels, wobei das Wertlabel mit Licht eine erste Wellenlänge enthaltend bestrahlt wird, die die Lumineszenz des lumineszierenden Stoffs anregt, sieht vor, dass das Wertlabel durch Bestrahlung mit energiereichen elektromagnetischen Wellen während seiner ersten Verwendung mit einem einen Kontrast zum lumineszierenden Hintergrund aufweisenden Motiv versehen wird. Ein solches Motiv kann detektiert werden, wenn das Wertlabel einer nochmaligen Verwendung zugeführt wird.

In einer vorteilhaften Ausführungsform wird der Kontrast durch eine Verringerung der Lumineszenzintensität erzeugt. Durch die Bestrahlung eines Teils der einen lumineszierenden Stoff enthaltenden Fläche des Wertlabels mit energiereicher Strahlung wird die lumineszierende Eigenschaft des Stoffs an dieser Stelle soweit reduziert, dass ein Kontrast zu der übrigen, nicht bestrahlten Teilfläche erzeugt wird, wenn die Lumineszenz durch Bestrahlung mit Licht enthaltend eine Wellenlänge, die dazu geeignet ist, die Lumineszenz anzuregen, bestrahlt wird.

In einer weiteren vorteilhaften Ausführungsform des erfindungsgemäßen Verfahrens stellt das Motiv einen Balken dar. Es sind auch andere Motive vorstellbar, beispielsweise eine Wellenlinie. Es hat sich herausgestellt, dass solche Motive sicher und schnell detektiert werden können.

In einer bevorzugten Ausführungsform wird die energiereiche Strahlung von einer einen gerichteten Lichtstrahl erzeugenden Lichtquelle erzeugt, deren Strahl in einer Bahnkurve entsprechend dem zu erzeugenden Motiv über die zu bestrahlende Fläche geführt wird. Bei der den gerichteten Lichtstrahl erzeugenden Lichtquelle kann es sich beispielsweise um einen Laser, eine LED oder auch eine Laserdiode handeln. Das emittierte Licht dieser Lichtquellen kann durch eine Optik weiter gebündelt sein. Zur Führung eines solchen Lichtstrahls in Form einer Bahnkurve ist eine bewegbare Optik vorstellbar. Genauso ist es aber auch möglich, den Lichtstrahl auf ein Spiegelsystem zu richten, wobei das Spiegelsystem einen beweglichen Spiegel enthält, der die Reflexion des Lichtstrahls in Form der Bahnkurve entsprechend dem zu erzeugen Motiv über die zu bestrahlende Fläche führt. Der Lichtstrahl kann dabei auch über beispielsweise eine Glasfaseroptik transportiert werden.

In einer weiteren vorteilhaften Ausführungsform wird die energiereiche Strahlung von einer einen kontinuierlichen Strahl erzeugenden Lichtquelle erzeugt. Das entsprechende Abbild in Form des Motivs auf der einen lumineszierenden Stoff enthaltenden Fläche weist dementsprechend ebenfalls eine kontinuierlich abgeschwächte Lumineszenz auf.

In einer bevorzugten Ausführungsform wird die energiereiche Strahlung von einer einen gepulsten Strahl erzeugenden Lichtquelle erzeugt. Dementsprechend weist das entsprechende Abbild in Form des Motivs auf der einen lumineszierenden Stoff enthaltenden Fläche eine kontinuierlich Lumineszenz in Form einer Punktmatrix auf, deren Dichte von der Pulsfrequenz abhängig ist.

In einer besonders bevorzugten Ausführungsform wird das Motiv musterartig wiederholt, wobei das Muster so engmaschig aufgebracht wird, dass die einen lumineszierenden Stoff enthaltende Fläche des Wertlabels von mindestens zwei Motiven zumindest teilweise getroffen wird. Die Form der das Muster bildenden Wiederholungen des Motivs kann dabei als weiteres Kriterium für die Detektion herangezogen werden, wodurch die Erkennung noch sicherer wird.

In einer weiteren bevorzugten Ausführungsform ist das Wertlabel auf eine Fläche aufgebracht, die keine lumineszierenden Stoffe enthält, wobei die gesamte Fläche während der ersten Verwendung des Wertlabels mit energiereichen elektromagnetischen Wellen bestrahlt wird. Der Vorteil dieser Ausführungsform liegt darin, dass für die Bestrahlung eines beispielsweise eine Postsendung freimachenden und auf die Oberfläche dieser Sendung aufgebrachten Wertlabels dieses nicht zunächst auf der Sendungsoberfläche lokalisiert werden muss, um es zu markieren. Stattdessen kann die gesamte Sendungsoberfläche bestrahlt werden, wobei auch das Wertlabel bestrahlt wird.

In einer weiteren Ausführungsform des Verfahrens wird die energiereiche Strahlung von einer Blitzlampe erzeugt, die die zu bestrahlende Fläche durch eine Schablone entsprechend dem zu erzeugenden Motiv bestrahlt. Vorteilhafterweise muss hierbei keine Bahnkurve abgefahren werden, sondern wird das gesamte Motiv mit einem Blitz der Blitzlampe zeitgleich aufgebracht. Wenn das Motiv musterartig wiederholt so engmaschig aufgebracht werden soll, dass die einen lumineszierenden Stoff enthaltende Fläche des Wertlabels von mindestens zwei Motiven zumindest teilweise getroffen wird, kann die energiereiche Strahlung von der Blitzlampe durch eine Schablone entsprechend dem zu erzeugenden Muster auf die zu bestrahlende Fläche aufgebracht werden. Auf diese Art kann das gesamte Muster mit einem Blitz der Blitzlampe zeitgleich aufgebracht werden, wodurch Zeit für die Aufbringung eingespart wird. Es ist dabei auch möglich, die Schablone beispielsweise oszillierend zu bewegen, um so ein Muster aufzubringen beziehungsweise das in der Schablone abgebildete Muster zu verändern. Darüber hinaus ist es möglich, die Blitzlampe stroboskopartig zu betreiben, wobei die Frequenz der Blitze verändert werden kann. Beispiels weise kann die Frequenz in der Form lang-kurz-lang verändert werden. Zusätzlich ist es möglich, statt der Blitzlampe LED's (light emitting diods) zu benutzen. Dabei ist auch vorstellbar, statt einer Schablone ansteuerbare LED-Zeilen zu benutzen, um ein Muster aufbringen zu können.

Eine erfindungsgemäße Vorrichtung zum Markieren eines für die Einmalbenutzung vorgesehenen, eine einen lumineszierenden Stoff enthaltende Fläche aufweisenden Wertlabels enthält eine Bestrahlungseinrichtung zum Bestrahlen der einen lumineszierenden Stoff enthaltenden Fläche des Wertlabels mit energiereicher Strahlung, die dazu geeignet ist, auf der einen lumineszierende Stoff enthaltenden Fläche des Wertlabels ein Motiv mit eingeschränkter Lumineszenz zu erzeugen. Bei der den gerichteten Lichtstrahl erzeugenden Lichtquelle kann es sich beispielsweise um einen Laser, eine LED oder auch eine Laserdiode handeln. Das emittierte Licht dieser Lichtquellen kann durch eine Optik weiter gebündelt sein.

In einer vorteilhaften Ausführungsform der Vorrichtung enthält die Bestrahlungseinrichtung eine einen gerichteten Lichtstrahl erzeugende Lichtquelle, deren Strahl in einer Bahnkurve entsprechend dem zu erzeugenden Motiv über die zu bestrahlende Fläche geführt werden kann. Zur Führung eines solchen Lichtstrahls in Form einer Bahnkurve ist eine zu bewegende Optik vorstellbar. So ist es beispielsweise möglich, den Lichtstrahl auf ein Spiegelsystem zu richten, wobei das Spiegelsystem einen beweglichen Spiegel enthält, der die Reflexion des Lichtstrahls in Form der Bahnkurve entsprechend dem zu erzeugen Motiv über die zu bestrahlende Fläche führt. Der Lichtstrahl kann dabei auch über beispielsweise eine Glasfaseroptik transportiert werden.

In einer alternativen Ausführungsform enthält die Bestrahlungseinrichtung eine energiereiche Strahlung emittierende Blitzlampe und eine ein Motiv enthaltende Schablone, wobei die Blitzlampe und die Schablone so angeordnet sind, dass die von der Blitzlampe emittierte Strahlung durch die Schablone so auf die zu bestrahlende Fläche trifft, so dass das Motiv der Schablone auf das Wertlabel übertragen wird. Soll das Motiv musterartig wiederholt werden, kann die Schablone zwischen einzelnen Blitzen der Blitzlampe entsprechend bewegt werden. Es ist aber auch möglich, in einer Schablone das Motiv musterartig wiederholt anzuordnen oder mehrere Schablonen mit einem oder mehreren Motiven nebeneinander anzuordnen, so dass ein entsprechendes Muster mit einem Blitz der Blitzlampe auf die zu bestrahlende Fläche übertragen wird. Dadurch wird Zeit für die Bestrahlung eingespart.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigt:
- Fig. 1: ein Postwertzeichen unter tageslichtähnlicher Beleuchtung
- Fig. 2: eine Sendungsoberfläche mit aufgebrachtem Postwertzeichen unter einer die Lumineszenz anregenden Beleuchtung
- Fig. 3: eine Sendungsoberfläche mit aufgebrachtem Postwertzeichen unter einer die Lumineszenz anregenden Beleuchtung, wobei das Postwertzeichen durch Stempelaufdruck entwertet ist.
- Fig. 4: ein mit Balken markiertes Postwertzeichen unter tageslichtähnlicher Beleuchtung
- Fig. 5: eine Sendungsoberfläche mit aufgebrachtem, mit Balken markiertem Postwertzeichen unter einer die Lumineszenz anregenden Beleuchtung
- Fig. 6: eine schematische Anordnung einer Vorrichtung zum Markieren von auf Sendungsoberflächen aufgebrachten Postwertzeichen mit einem Bahnkurven abfahrenden Laserstrahl
- Fig. 7: eine schematische Anordnung einer Vorrichtung zum Markieren von auf Sendungsoberflächen aufgebrachten Postwertzeichen mit einer durch eine Schablone strahlenden Blitzlampe
- Fig. 8: eine Draufsicht auf eine Schablone

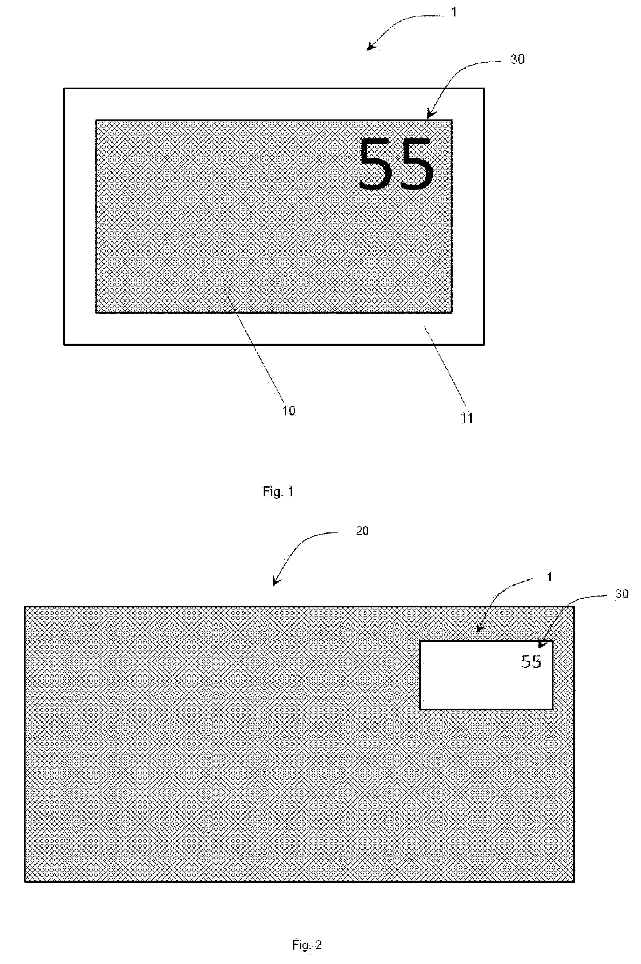

Fig. 1 zeigt ein Postwertzeichen unter tageslichtähnlicher Beleuchtung. Eine Fläche 10 ist mit einer lumineszierende Partikel enthaltenden Druckfarbe bedruckt. Die lumineszierende Eigenschaft ist unter tageslichtähnlicher Beleuchtung nicht sichtbar, zur besseren Erläuterung in der Figur aber kreuzschraffiert dargestellt. Des Weiteren enthält das Postwertzeichen einen umlaufenden Rand 11, der keine lumineszierenden Partikel enthält. Dieser Rand ist hier zur Verdeutlichung des Prinzips gewählt. Die Erfindung setzt nicht das Vorhandensein eines solchen Randes voraus. In dem Ausführungsbeispiel ist zusätzlich der Aufdruck einer Wertangabe 30 auf der lumineszierenden Fläche 10 vorgesehen, wobei dieser Aufdruck mit einer Druckfarbe ausgeführt ist, die keine lumineszierenden Partikel enthält. Auch ein solcher Wertaufdruck ist nicht Voraussetzung für die Durchführbarkeit des erfindungsgemäßen Verfahrens, sondern dient nur der Prinzipverdeutlichung.

Wird das Postwertzeichen auf eine Sendungsoberfläche 20 aufgebracht und diese mit Licht eine Wellenlänge enthaltend, die die lumineszierende Eigenschaft der Partikel in der Druckfarbe auf der Fläche 10 anregt, bestrahlt, so erscheint die Sendungsoberfläche 20 dunkel und nur die die lumineszierenden Partikel enthaltende Fläche 10 des Postwertzeichens 1 hell, wie in Fig. 2 zu sehen. Auch der keine lumineszierenden Partikel enthaltende Rand 11 des Postwertzeichens 1 erscheint dunkel und ist auf der dunkel erscheinenden Sendungsoberfläche 20 nicht zu identifizieren. Die Wertangabe 30 erscheint ebenfalls dunkel, da der Aufdruck der Wertangabe 30 mit einer nicht lumineszierenden Druckfarbe die lumineszierenden Partikel in diesem Bereich überdeckt. Bei dem Postwertzeichen 1 handelt es sich um ein nicht entwertetes, sich in der ersten Benutzung befindliches Postwertzeichen, beziehungsweise um ein Postwertzeichen in einer weiteren Benutzung, wobei die Entwertung entfernt wurde. Die lumineszierende Partikel enthaltende Fläche 10 erscheint abgesehen von der Wertangabe 30 als im Wesentlichen homogene helle Fläche.

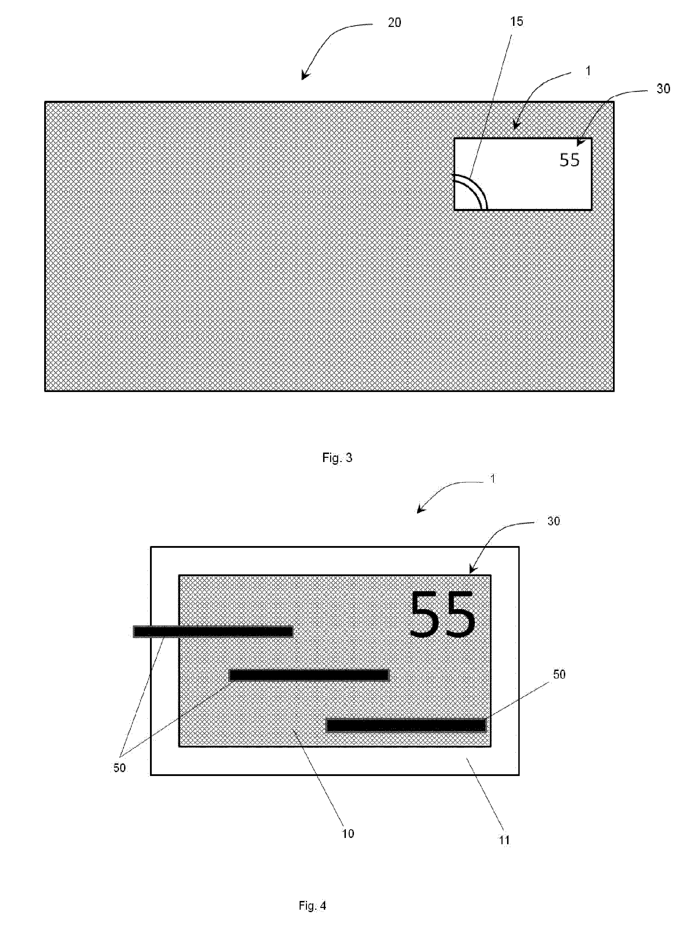

Ist das Postwertzeichen 1 entwertet und die Entwertung nicht entfernt, sieht das Bild der das Postwertzeichen 1 enthaltenden Sendungsoberfläche 20 unter einer die lumineszierende Eigenschaft anregenden Beleuchtung wie in Fig. 3 gezeigt aus. Ein Stempelaufdruck aus nicht lumineszierender Farbe 15 ist zumindest teilweise über die lumineszierende Partikel enthaltende Fläche 10 aufgebracht und deckt die lumineszierenden Partikel ab, so dass der Aufdruck auf dem Postwertzeichen zu erkennen ist. Bei der Überprüfung der Sendung auf das Vorhandensein einer gültigen Freimachung kann die lumineszierende Partikel enthaltende Fläche 10 als nicht homogen hell leuchtend erkannt und so die Freimachung als ungültig klassifiziert werden.

In **Fig. 4** ist ein Postwertzeichen 1 unter tageslichtähnlicher Beleuchtung zu sehen, das eine zusätzliche Markierung in Form von drei Balken 50 enthält. Wie bereits bei der Beschreibung der Fig. 1 gesagt, ist die lumineszierende Eigenschaft der Fläche 10 unter tageslichtähnlicher Beleuchtung nicht zu erkennen, aus Gründen der Veranschaulichung aber in der Figur kreuzschraffiert dargestellt. Die Balken 50 sind ebenso unter tageslichtähnlicher Beleuchtung nicht zu erkennen, zur Verdeutlichung aber in der Figur schwarz dargestellt. Diese Balken sind mit energiereicher Strahlung aufgebracht, die die lumineszierende Eigenschaft der entsprechenden Partikel in der die Fläche 10 bedeckenden Druckfarbe verringert.

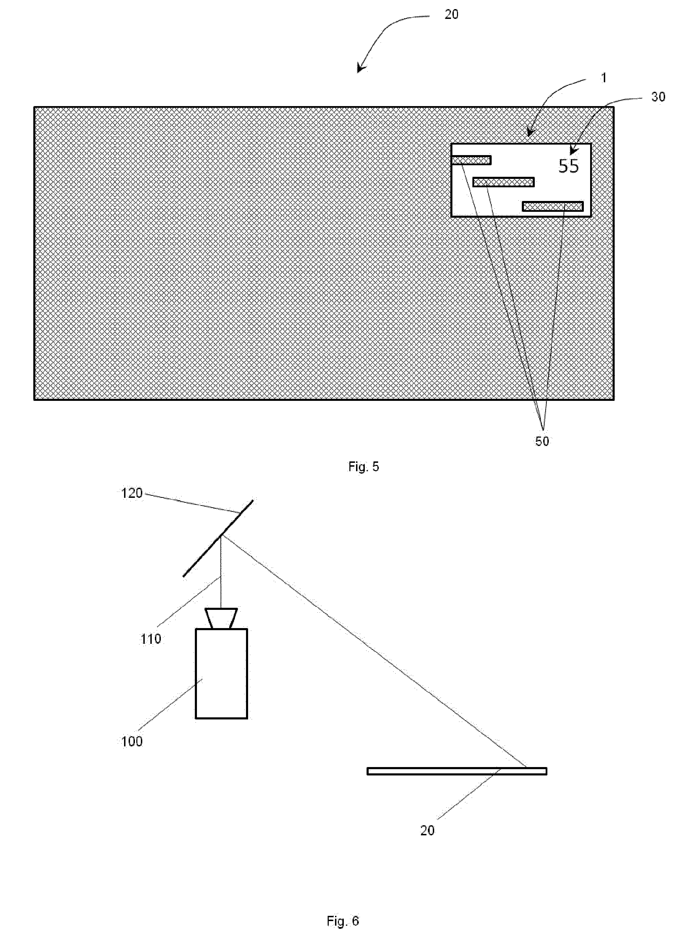

In der in **Fig. 5** dargestellten Situation wird eine ein solches Postwertzeichen 1 enthaltende Sendungsoberfläche 20 unter einer Beleuchtung mit Licht eine Wellenlänge enthaltend, die die lumineszierende Eigenschaft der Partikel auf der Fläche 10 anregt, betrachtet. Die Fläche 10 erscheint nicht mehr im Wesentlichen homogen hell, wie in Fig. 2 gezeigt. Stattdessen erscheinen die Balken 50 wie die restliche, keine Postwertzeichen 1 enthaltende Sendungsoberfläche 20 dunkel, wie in Fig. 5 durch die Kreuzschraffur angedeutet. Durch den Vergleich eines unter diesen Bedingungen aufgenommenen, das Postwertzeichen 1 enthaltenden Ausschnitts eines Bildes mit einem Vergleichsbild, auf dem das gleiche Postwertzeichen unter der gleichen Beleuchtung im Neuzustand abgebildet ist, können die Balken 50 als Differenz der beiden Bilder detektiert und das Postwertzeichen als mehrfach verwendet charakterisiert werden. Die entsprechende Sendung kann ausgeschleust und einer Sonderbehandlung unterzogen werden.

In **Fig. 6** ist das Prinzip einer Ausführungsform einer Vorrichtung zum gezielten, musterförmigen Aufbringen der energiereichen Strahlung auf die lumineszierende Partikel enthaltende Fläche 10 des auf einer Sendungsoberfläche 20 aufgebrachten Postwertzeichens 1 dargestellt. Als Strahlungsquelle dient ein Laser 100, der einen energiereichen Strahl 110 beispielsweise im Wellenlängenbereich von UV- oder IR-Strahlung emittiert. Dieser Strahl 110 wird gegen einen Spiegel 120 gerichtet, wobei dieser Spiegel im Raum gekippt werden kann. Durch eine gesteuerte Bewegung dieses Spiegels 120 wird der Strahl 110 so umgelenkt, dass er Bahnkurven auf der lumineszierende Partikel enthaltenden Fläche 10 des auf einer Sendungsoberfläche 20 aufgebrachten Postwertzeichens 1 abfährt und dort, wo er auf die Fläche 10 auftrifft, die lumineszierende Eigenschaft der Partikel verringert oder gar zerstört. Die Bahnkurven können dabei Geradenabschnitte sein, so dass Balken 50 mit verringerter lumineszierender Eigenschaft auf der lumineszierende Partikel enthaltenden Fläche 10 des auf einer Sendungsoberfläche 20 aufgebrachten Postwertzeichens erzeugt werden. Die Bahnkurven können aber auch Wellenlinien oder auch andere Muster darstellen, die entsprechende Muster von weniger lumineszierenden Bereichen auf der der lumineszierende Partikel enthaltenden Fläche 10 des auf einer Sendungsoberfläche 20 aufgebrachten Postwertzeichens erzeugen.

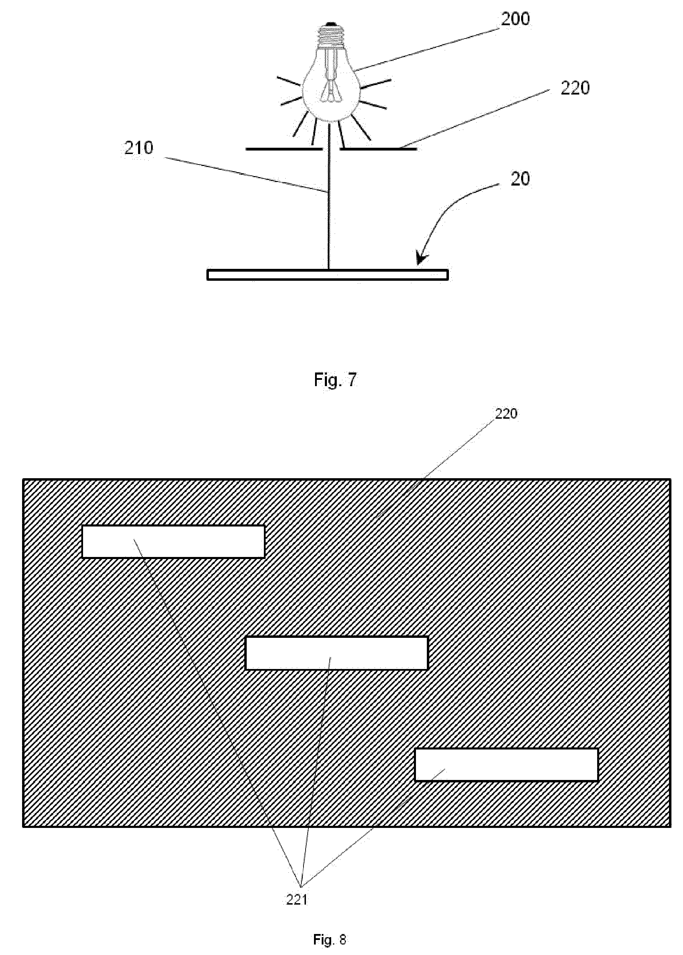

Das Abfahren von Bahnkurven benötigt Zeit, die die Durchlaufgeschwindigkeit von Sendungen durch die Vorrichtung limitieren kann. Die in **Fig. 7** dargestellte alternative Ausführungsform einer zur Durchführung des erfindungsgemäßen Verfahrens geeigneten Vorrichtung ist in der Lage, entsprechende Muster schneller auf die lumineszierende Partikel enthaltende Fläche 10 des auf einer Sendungsoberfläche 20 aufgebrachten Postwertzeichens 1 zu erzeugen. Die Vorrichtung enthält eine Blitzlampe 200, die stroboskopähnlich energiereiche Strahlung beispielsweise im UV- oder IR-Bereich emittiert. Zwischen der Blitzlampe 200 und der zu bestrahlenden Sendungsoberfläche 20 ist eine Schablone 220 angeordnet, die wie in **Fig. 8** dargestellte Durchbrüche 221 analog zu dem aufzubringenden Muster 50 enthält. Ein Großteil der von der Blitzlampe 200 emittierten Strahlung wird von der Schablone 220 davon abgehalten, auf die Sendungsoberfläche 20 zu treffen. Strahlen 210 jedoch, die durch einen Durchbruch 221 der Schablone 220 treten können, treffen auf die lumineszierende Partikel enthaltende Fläche 10 des auf einer Sendungsoberfläche 20 aufgebrachten Postwertzeichens 1 und verringern damit punktuell die lumineszierende Eigenschaft der Partikel. Durch die Wahl der Form des Durchbruchs 221 der Schablone 220 kann das Muster bestimmt werden, das als geringer lumineszierend auf der lumineszierende Partikel enthaltende Fläche 10 des auf einer Sendungsoberfläche 20 aufgebrachten Postwertzeichens 1 entstehen soll. Die Blitzlampe 200 belichtet dabei durch die Schablone 220 alle Bereiche, die ihre lumineszierende Eigenschaft verringern sollen gleichzeitig, so dass eine solche Vorrichtung schneller arbeiten kann als die in Fig. 6 dargestellte Vorrichtung mit Laser 100 und Spiegel 120.

In den in den Figuren dargestellten Ausführungsbeispielen sind Postwertzeichen als Wertlabel beschrieben. Selbstverständlich können auch alle anderen Wertlabel, die eine lumineszierende Partikel enthaltende Fläche 10 enthalten, auf die beschriebene Weise behandelt werden.

### Bezugszeichenliste:

- 1: Wertlabel, Postwertzeichen
- 10: lumineszierenden Partikel enthaltende Fläche
- 15: Entwertungsaufdruck
- 11: nicht lumineszierenden Partikel enthaltende Fläche
- 20: Sendungsoberfläche
- 30: Wertangabe
- 50: Markierung, Motiv
- 100: Laser
- 110: Laserstrahl
- 120: Spiegel
- 200: Blitzlampe
- 210: Lichtstrahl aus der Blitzlampe
- 220: Schablone
- 221: Durchbruch

## Patentansprüche

1. Verfahren zum Detektieren eines mehrfach benutzten, für die Einmalbenutzung vorgesehenen, eine einen lumineszierenden Stoff enthaltende Fläche (10) aufweisenden Wertlabels (1), wobei das Wertlabel (1) mit Licht eine erste Wellenlänge enthaltend bestrahlt wird, die die Lumineszenz des lumineszierenden Stoffs anregt,
**dadurch gekennzeichnet,**
**dass** das Wertlabel (1) durch Bestrahlung mit energiereichen elektromagnetischen Wellen während seiner ersten Verwendung mit einem einen Kontrast zum lumineszierenden Hintergrund aufweisenden Motiv (50) versehen wird.

2. Verfahren nach Anspruch 1,
**dadurch gekennzeichnet,**
**dass** der Kontrast durch eine Verringerung der Lumineszenzintensität erzeugt wird.

3. Verfahren nach einem der vorherigen Ansprüche,
**dadurch gekennzeichnet,**
**dass** das Motiv (50) einen Balken darstellt.

4. Verfahren nach einem der vorherigen Ansprüche,
**dadurch gekennzeichnet,**
**dass** das Motiv (50) eine Wellenlinie darstellt.

5. Verfahren nach einem der vorhergehenden Ansprüche,
**dadurch gekennzeichnet,**
**dass** die energiereiche Strahlung von einer einen gerichteten Lichtstrahl erzeugenden Lichtquelle (100) erzeugt wird, deren Strahl (110) in einer Bahnkurve entsprechend dem zu erzeugenden Motiv (50) über die zu bestrahlende Fläche geführt wird.

6. Verfahren nach einem der vorhergehenden Ansprüche,
**dadurch gekennzeichnet,**
**dass** die energiereiche Strahlung von einer einen kontinuierlichen Strahl erzeugenden Lichtquelle (100) erzeugt wird.

7. Verfahren nach einem der Ansprüche 1 bis 5,
**dadurch gekennzeichnet,**
**dass** die energiereiche Strahlung von einer einen gepulsten Strahl erzeugenden Lichtquelle (100) erzeugt wird.

8. Verfahren nach einem der vorhergehen Ansprüche,
**dadurch gekennzeichnet,**
**dass** das Motiv (50) musterartig wiederholt ist, wobei das Muster so engmaschig aufgebracht wird, dass die einen lumineszierenden Stoff enthaltende Fläche (10) des Wertlabels (1) von mindestens zwei Motiven (50) zumindest teilweise getroffen wird.

9. Verfahren nach einem der vorhergehenden Ansprüche,
**dadurch gekennzeichnet,**
**dass** das Wertlabel (1) auf eine Fläche (20) aufgebracht ist, die keine lumineszierenden Stoffe enthält, und die gesamte Fläche während der ersten Verwendung des Wertlabels (1) mit energiereichen elektromagnetischen Wellen bestrahlt wird.

10. Verfahren nach einem der Ansprüche 1 bis 4,
**dadurch gekennzeichnet,**
**dass** die energiereiche Strahlung von einer Blitzlampe (200) erzeugt wird, die die zu bestrahlende Fläche durch eine Schablone (220) entsprechend dem zu erzeugenden Motiv bestrahlt.

11. Verfahren nach einem der Ansprüche 1 bis 4,
**dadurch gekennzeichnet,**
**dass** das Motiv (50) musterartig wiederholt ist, wobei das Muster so engmaschig aufgebracht wird, dass die einen lumineszierenden Stoff enthaltende Fläche (10) des Wertlabels (1) von mindestens zwei Motiven zumindest teilweise getroffen wird und das Wertlabel (1) auf eine Fläche (20) aufgebracht ist, die keine lumineszierenden Stoffe enthält, und die gesamte Fläche während der ersten Verwendung des Wertlabels (1) mit energiereichen elektromagnetischen Wellen bestrahlt wird, und die energiereiche Strahlung von einer Blitzlampe (200) erzeugt wird, die die zu bestrahlende Fläche durch eine Schablone (220) entsprechend dem zu erzeugenden Muster bestrahlt.

12. Vorrichtung zum Markieren eines für die Einmalbenutzung vorgesehenen, eine einen lumineszierenden Stoff enthaltende Fläche (10) aufweisenden Wertlabels (1),
**dadurch gekennzeichnet,**
**dass** die Vorrichtung eine Bestrahlungseinrichtung zum Bestrahlen der einen lumineszierenden Stoff enthaltenden Fläche (10) des Wertlabels (1) mit energiereicher Strahlung enthält, die dazu geeignet ist, auf der einen lumineszierende Stoff enthaltenden Fläche (10) des Wertlabels (1) ein Motiv (50) mit eingeschränkter Lumineszenz zu erzeugen.

13. Vorrichtung nach Anspruch 12,
**dadurch gekennzeichnet,**
**dass** die Bestrahlungseinrichtung eine einen gerichteten Lichtstrahl erzeugenden Lichtquelle (100) enthält, deren Strahl (110) in einer Bahnkurve entsprechend dem zu erzeugenden Motiv (50) über die zu bestrahlende Fläche geführt werden kann.

14. Vorrichtung nach Anspruch 12,
**dadurch gekennzeichnet,**
**dass** die Bestrahlungseinrichtung eine energiereiche Strahlung emittierende Blitzlampe (200) und eine ein Motiv (50) enthaltende Schablone (220) enthält, wobei die Blitzlampe (200) und die Schablone (220) so angeordnet sind, dass die von der Blitzlampe (200) emittierte Strahlung (210) durch die Schablone (220) so auf die zu bestrahlende Fläche trifft, dass das Motiv der Schablone (220) auf das Wertlabel (1) übertragen wird.

15. Vorrichtung nach Anspruch 12,
**dadurch gekennzeichnet,**
**dass** die Bestrahlungseinrichtung eine energiereiche Strahlung emittierende Blitzlampe (200) und eine ein Muster enthaltende Schablone (220) enthält, wobei die Blitzlampe (200) und die Schablone (220) so angeordnet sind, dass die von der Blitzlampe (200) emittierte Strahlung (210) durch die Schablone (220) so auf die zu bestrahlende Fläche trifft, dass das Muster der Schablone (220) auf das Wertlabel (1) übertragen wird.
